# EUROPÄISCHE PATENTSCHRIFT

(11) **EP 3 914 464 B1**
(45) Veröffentlichungstag und Bekanntmachung des Hinweises auf die Patenterteilung: **13.03.2024**
(21) Anmeldenummer: 20702593.3
(22) Anmeldetag: 24.01.2020
(51) Int. Cl.: B60J 5/04, B60J 1/17

(54) **FAHRZEUGTÜRBAUGRUPPE MIT EINEM EINEN BRÜSTUNGSBEREICH VERSTEIFENDEM ORGANOBLECH-TÜRMODULTRÄGER**
VEHICLE DOOR ASSEMBLY WITH AN ORGANOSHEET DOOR MODULE CARRIER REINFORCING A SILL REGION
MODULE DE PORTE DE VÉHICULE COMPRENANT UN SUPPORT DE MODULE DE PORTE EN TÔLE ORGANIQUE RENFORÇANT UNE ZONE DE BORDURE DE VITRE

(30) Priorität: 25.01.2019 DE 102019200977
(43) Veröffentlichungstag der Anmeldung: 01.12.2021
(60) Teilanmeldung: 24152106.1
(73) Patentinhaber: Brose Fahrzeugteile SE & Co. Kommanditgesellschaft, Bamberg, 96052 Bamberg (DE)
(72) Erfinder: THIENEL, Michael, 95349 Thurnau (DE); CARL, Andre, 96450 Coburg (DE); HOFMANN, Dominik, 96148 Baunach (DE); ORDOSCH, Siegfried, 96049 Bamberg (DE)
(74) Vertreter: Maikowski & Ninnemann Patentanwälte Partnerschaft mbB
(86) Internationale Anmeldenummer: PCT/EP2020/051712
(87) Internationale Veröffentlichungsnummer: WO 2020/152310

(56) Entgegenhaltungen:
- WO-A1-2007/111782
- WO-A1-2016/177711
- DE-A1-102011 111 232
- DE-U1-202016 008 222
- US-A1- 2017 210 210

## Beschreibung

Die vorgeschlagene Lösung betrifft insbesondere eine Fahrzeugtürbaugruppe nach dem Oberbegriff des Anspruchs 1.

Eine gattungsgemäße Fahrzeugtürbaugruppe weist ein erstes Rahmenbauteil als Teil eines Türrohbaus auf, das einen Fensterrahmen für eine Fensteröffnung sowie zwei einander gegenüberliegende seitliche Rahmenabschnitte zur Definition eines Rahmenausschnitts umfasst. Die Fensteröffnung und der Rahmenausschnitt sind durch einen längs verlaufenden Brüstungsabschnitt voneinander getrennt, der die zwei seitlichen Rahmenabschnitte des ersten Rahmenbauteils verbindet. An dem Brüstungsabschnitt wird im montierten Zustand der Fahrzeugtürbaugruppe ein Brüstungsbereich der Fahrzeugtür vorgesehen. In der Praxis ist zur Verstärkung des Fensterrahmens, d.h. des Bereichs oberhalb des Brüstungsabschnitts, und des Brüstungsbereichs ein zweites Rahmenbauteil als Fensterrahmenverstärkung vorgesehen und an dem ersten Rahmenbauteil fixiert. Typischerweise erstreckt sich hierbei das zweite Rahmenbauteil auch entlang des Brüstungsabschnitts, um diesen zu versteifen.

Zum zumindest teilweise Verschließen des Rahmenausschnitts an dem ersten Rahmenbauteil unterhalb des Brüstungsabschnitts ist ein Türmodulträger montiert, der mit einem Organoblech gebildet ist. Eine gattungsgemäße Fahrzeugtürbaugruppe mit einem Türmodulträger ist beispielsweise aus der WO 2016/17711 A1 bekannt. Der Türmodulträger ist hierbei über einen brüstungsnahen Randabschnitt entlang einer Längserstreckungsrichtung des Brüstungsabschnitts mehrfach an dem Brüstungsabschnitt fixiert. Konstruktionsbedingt ist der Türmodulträger der WO 2016/177711 A1 im Bereich des Randabschnitts, über den der Türmodulträger an dem Brüstungsabschnitt des Türrohbaus fixiert ist, vergleichsweise flexibel ausgebildet. Mit anderen Worten ist über das Organoblech an dem Randabschnitt gezielt eine gewisse Flexibilität eingebracht, um die Montage des Türmodulträgers an den Rahmenausschnitt zu erleichtern, der im montierten Zustand der Fahrzeugtür den Zugang zu einem Türschacht zwischen einer Türaußenhaut (z.B. in Form eines Türaußenblechs) und Türinnenhaut (z.B. in Form eines Türinnenblechs) definiert. Derart kann der Türmodulträger im Bereich des Brüstungsabschnitts nur bedingt die im Betrieb der Fahrzeugtür auftretenden Lasten tragen, sodass insbesondere im Bereich des Brüstungsabschnitts weiterhin ein wenigstens zweiteiliger Aufbau mit einer Fensterrahmenverstärkung vorgesehen werden muss. Der Türmodulträger trägt somit nur untergeordnet zur Steifigkeit der Fahrzeugtür bei. Dementsprechend werden Lastpfade für auftretende Kräfte, an denen entlang sich die im Betrieb der Fahrzeugtür aufgetreten Belastungen ausbreiten, um den Rahmenausschnitt herumgeleitet.

Vergleichbare Fahrzeugtürbaugruppen sind in den Dokumenten US 2017/210210 A1, WO 2007/111782 A1 und DE 20 2016 008222 U1 beschrieben.

Hiervon ausgehend liegt der vorgeschlagenen Lösung die Aufgabe zugrunde, eine Fahrzeugtürbaugruppe weiter zu verbessern.

Diese Aufgabe ist mit einer Fahrzeugtürbaugruppe nach Anspruch 1 gelöst.

Eine vorgeschlagene Fahrzeugtürbaugruppe sieht hierbei vor, dass der mit Organoblech gebildete Türmodulträger als tragendes Strukturbauteil ausgebildet ist und hierfür
- an seinem Randabschnitt durch mindestens eine an das Organoblech angespritzte Versteifungsstruktur versteift ist und
- mit seinem Randabschnitt den Brüstungsabschnitt des ersten Rahmenbauteils in einem durchgehenden Bereich verstärkt, in dem kein Abschnitt des zweiten Rahmenbauteils vorgesehen ist.

Die vorgeschlagene Lösung geht damit von dem Grundgedanken aus, dass der Türmodulträger, der zu einem wesentlichen Teil durch Organoblech gebildet ist, in seinem brüstungsnahen Randabschnitt, an dem auch die Fixierung an dem ersten Rahmenbauteil erfolgt, derart versteift ist und versteifend wirkt, dass der Türmodulträger zum tragenden Bestandteil der Fahrzeugtür wird. Durch die gezielte Versteifung des mit faserverstärktem, insbesondere endlosfaserverstärkten Kunststoffmaterial gebildeten Türmodulträgers ist hierbei erreicht, dass der Türmodulträger bei vergleichsweise geringem Gewicht eine derart gezielt erhöhte mechanische Steifigkeit aufweist, dass eine zusätzliche Verstärkung des Brüstungsabschnitts durch ein zweites Rahmenbauteil entfallen kann. Hierdurch ist es auch möglich, den Rahmenausschnitt gegenüber bisher bekannten Konstruktionen erheblich zu vergrößern. Der Rahmenausschnitt für den Türmodulträger kann damit lediglich noch durch vergleichsweise schmale Abschnitte des Türrohbaus umfangsseitig umlaufend eingerahmt sein. Der montierte Türmodulträger überspannt dann z.B. im montierten Zustand mehr als 85%, insbesondere mehr als 90% der unterhalb der Fensteröffnung durch den Türrohbau definierten Fläche.

Unter der Bildung des Türmodulträgers mit einem Organoblech wird dabei verstanden, dass der Türmodulträger zu einem wesentlichen Teil durch Organoblech gebildet ist. Der Türmodulträger erstreckt sich dabei entlang einer Hauptebene. An einem Türmodulträger sind beispielsweise Funktionselemente festgelegt, wie z.B. Funktionselemente eines Fensterhebers oder eines Türschlosses. Der Türmodulträger kann hierbei beispielsweise durch ein plattenförmiges Halbzeug ausgebildet sein, welches aus einem Organoblech besteht. Bei dem Organoblech handelt es sich z.B. um einen endlosfaserverstärkten thermoplastischen Kunststoff, bei dem Endlosfasern in Form von Gelegen, Geweben oder Gestricken aus Glas-, Kevlar-, Kohle- oder Kunststofffasern in eine thermoplastische Matrix eingebettet sind. Als thermoplastischer Kunststoff für die Matrix eignet sich beispielsweise Polyamid oder Polypropylen. Unter der Bezeichnung endlosfaserverstärkt ist zu verstehen, dass die Länge der der Verstärkung dienenden Fasern im Wesentlichen durch die Größe des plattenförmigen Organoblechs begrenzt ist. Innerhalb des Organoblechs ist somit eine Faser in der Regel nicht unterbrochen.

Dass der Türmodulträger zu einem wesentlichen Teil durch Organoblech gebildet ist, bedeutet dabei weiterhin, dass das Organoblech denjenigen Teil des Türmodulträgers bildet, der den Großteil der unter normalen Betriebsbedingungen auftretenden Kräfte erfährt. Ein (z.B. eine oder mehrere Führungsschienen tragender, zusammenhängender) Teil des Türmodulträgers aus Organoblech oder mehrere (z.B. eine oder mehrere Führungsschienen tragenden) Teile des Türmodulträgers aus Organoblech erstrecken sich beispielsweise über etwa 30% oder mehr der Fläche des Türmodulträgers.

Grundsätzlich kann sich das Organoblech somit über mehr als 30%, insbesondere über mehr als 40% und in der Regel über mindestens 50% der Fläche des Türmodulträgers erstrecken, sodass das Organoblech damit auch einen entsprechenden Anteil von mehr als 30%, insbesondere mehr als 40% oder etwa 50% oder mehr der Oberfläche des Türmodulträgers in der durch ihn definierten Hauptebene bildet. Um die Festigkeitsvorteile des Organoblechs voll zu nutzen, wird man in der Regel versuchen, den Anteil des Organoblechs an der Fläche des Türmodulträgers zu maximieren. Eine mehrteilige Ausbildung des Organoblechs an einem Türmodulträgers ist hierbei nicht ausgeschlossen.

Ein Hauptbestandteil des Türmodulträgers ist beispielsweise ein plattenförmiges Halbzeug, welches aus einem Organoblech besteht. Somit definiert das Organoblech eine wesentliche flächige Ausdehnung des Türmodulträgers, kann aber durch weitere Komponenten bzw. Materialien ergänzt sein. So können beispielsweise metallische Elemente und/oder Kunststoffelemente in das Organoblech eingearbeitet oder an dem Organoblech angebracht sein.

Im Zuge einer Ausführungsvariante der vorgeschlagenen Lösung ist der Brüstungsabschnitt des ersten Rahmenbauteils nicht durch das zweite, die Fensterrahmenverstärkung definierende Rahmenbauteil verstärkt. Das zweite, an dem ersten Rahmenbauteil fixierte Rahmenbauteil ist somit beispielsweise im Bereich des Brüstungsabschnitts nicht durchgängig ausgebildet und im Wesentlichen U-förmig. Dies führt gegenüber einem sich auch entlang des Brüstungsabschnitts erstreckendem zweiten Rahmenbauteil zu Gewichts- und Kostenvorteilen.

Erfindungsgemäß erstreckt sich in der Brüstungsabschnitt des ersten Rahmenbauteils zwischen zwei einander gegenüberliegenden Flanschabschnitten des zweiten Rahmenbauteils, die an dem zweiten Rahmenbauteil nur durch eine den Fensterrahmen verstärkende Fensterrahmenverstärkung des zweiten Rahmenbauteils miteinander verbunden sind. Die zwei einander gegenüberliegenden (in einer Seitenansicht auf die Fahrzeugtürbaugruppe rechten und linken) Flanschabschnitte sind folglich nur durch die sich oberhalb des Brüstungsabschnitts erstreckende Fensterrahmenverstärkung des zweiten Rahmenbauteils miteinander verbunden, nicht aber im Brüstungsbereich der Fahrzeugtür.

In einer Ausführungsvariante erstrecken sich die Flanschabschnitte des zweiten Rahmenbauteils jeweils nicht über einen Übergangsbereich des ersten Rahmenbauteils hinweg, über den einer der zwei seitlichen Rahmenabschnitte in den Brüstungsabschnitt übergeht. Über einen entsprechenden zugeordneten Übergangsbereich ist der jeweilige Flanschabschnitt an dem ersten Rahmenbauteil fixiert, beispielsweise einfach oder mehrfach verschraubt. Eine durchgehende Erstreckung des zweiten Rahmenbauteils über den Flanschabschnitt hinaus an dem Brüstungsabschnitt entlang ist jedoch nicht vorgesehen.

Die Versteifungsstruktur des Türmodulträgers ist beispielsweise mit einer Mehrzahl an Versteifungsrippen ausgebildet. Eine entsprechende Versteifungsstruktur, die an das Organoblech des Türmodulträgers angespritzt ist, kann somit eine Mehrzahl von sich in unterschiedlichen Raumrichtungen erstreckende Verstärkungsrippen aufweisen, um gerade den brüstungsnahen Randabschnitt des Türmodulträgers für die Aufnahme von Lasten zu versteifen und den Türmodulträger als tragendes Strukturbauteil vorsehen zu können. Die Versteifungsstruktur ist, insbesondere in dieser Ausführungsvariante, beispielsweise in einem schmalbandigen Bereich nahe eines (bezogen auf die bestimmungsgemäß montierte Ausrichtung) oberen Randes des Türmodulträgers vorgesehen. Dieser schmalbandige Bereich, in dem die Versteifungsstruktur ausgebildet ist, verläuft beispielsweise mit einer Breite von ca. 2 bis 10 cm, insbesondere 5 bis 10 cm an dem oberen Rand des Türmodulträgers entlang.

In einer Ausführungsvariante ist wenigstens ein dem Brüstungsabschnitt des ersten Rahmenbauteils gegenüberliegender Rand des Türmodulträgers teilweise oder vollständig durch an das Organoblech angespritztes Material gebildet. Beispielsweise ist ein durchgängiger Randsteg durch angespritztes Material gebildet, an dem eine Dichtung zur Abdichtung im Bereich des Brüstungsabschnitts vorgesehen wird.

Mit der Versteifungsstruktur kann auch mindestens eine Befestigungsstelle ausgebildet sein, über die der Randabschnitt des Türmodulträgers an dem Brüstungsabschnitt des ersten Rahmenbauteils fixiert ist. In der angespritzten Versteifungsstruktur ist somit z.B. mindestens eine Durchgangsöffnung ausgebildet, beispielsweise in mindestens ein Schraubdom ausgebildet, an dem eine Verschraubung des Türmodulträgers mit dem Brüstungsabschnitt des ersten Rahmenbauteils vorgesehen ist. An einem entsprechenden Schraubdom können kann zusätzlich eine oder mehrere Versteifungsrippen der Versteifungsstruktur ausgebildet sein.

Insbesondere mit Blick auf die Ausbildung des Türmodulträgers als tragendes großflächiges Strukturbauteil innerhalb der Fahrzeugtür ist in einer Ausführungsvariante an dem Türmodulträger eine längserstreckte Führungsschiene eines Fensterhebers vorgesehen, die vollständig innerhalb des Rahmenausschnitts des ersten Rahmenbauteils liegt. In Längserstreckungsrichtung der Führungsschiene ist folglich kein Überstand vorgesehen, mit dem die Führungsschiene über einen Rand des Türmodulträgers hinausragt. Durch die Ausbildung des Türmodulträgers als tragendes Strukturbauteil lässt sich der Türmodulträger vielmehr derart großflächig ausgestalten, dass eine hieran vorgesehene Führungsschiene ohne Beschränkung des damit zu realisierenden Hubs für die zu verstellende Fensterscheibe an dem Türmodulträger vollständig Platz findet. Dies erleichtert auch die Montage des mit mindestens einer Führungsschiene bereits versehenen Türmodulträgers an das erste Rahmenbauteil, da dies ohne ein etwaiges Verkippen des Türmodulträgers möglich ist und die Führungsschiene senkrecht zu ihrer Längserstreckung durch den Rahmenausschnitt hindurch geführt werden kann.

Zur zusätzlichen Funktionsintegration in den Türmodulträger kann an das Organoblech des Türmodulträgers mindestens eine Komponente eines Fensterhebers angespritzt sein. Beispielsweise ist mindestens eine Führungsschiene des Fensterhebers an das Organoblech angespritzt. Die Führungsschiene ist folglich durch an das Organoblech angespritztes Material ausgebildet und damit integraler Bestandteil des Türmodulträgers.

Die Versteifungsstruktur und die mindestens eine an das Organoblech angespritzte Komponente des Fensterhebers können auch aus demselben Material bestehen.

Grundsätzlich kann das Organoblech des Türmodulträgers aus einem faserverstärktem Kunststoffmaterial, insbesondere einem glasfaserverstärktem Kunststoffmaterial, zum Beispiel faserverstärktem Polypropylen bestehen. In das entsprechende Kunststoffmaterial sind z.B. Fasergewebe oder Fasergelege eingebettet. In einer Ausführungsvariante besteht das Organoblech des Türmodulträgers aus einem faserverstärkten duroplastischen Werkstoff.

Zur zusätzlichen Versteifung des Türmodulträgers ist beispielsweise in einer Ausführungsvariante mindestens ein Band (englisch: "Tape") bidirektional ausgerichteter Verstärkungsfasern an dem Türmodulträger vorgesehen. Zur wenigstens lokalen Steifigkeitserhöhung an dem Türmodulträger ist somit beispielsweise ein zusätzliches Band mit bidirektional ausgerichteten Verstärkungsfasern aufgebracht. Durch ein zusätzliches Aufbringen eines entsprechenden Bandes auf den Lastpfaden, entlang der sich im Betrieb der Fahrzeugtür Kräfte durch den als tragendes Strukturbauteil ausgebildeten Türmodulträger ausbreiten, ist dann eine gezielte Verstärkung des Türmodulträgers erreicht. Insbesondere können entsprechende Bänder auf einem spritzgegossenen Organoblech-Türmodulträger vorgesehen sein, der zu einem wesentlichen Teil durch lang- oder endlosfaserverstärktes Polypropylen gebildet ist.

Das mindestens eine Band bidirektional ausgerichteter Verstärkungsfasern kann ferner beispielsweise durch ein Laminat gebildet sein.

Bei einem Türmodulträger für eine Fahrzeugtür, der mit Organoblech gebildet ist und eine Trägerfläche ausbildet, kann eine entsprechende Trägerfläche beispielsweise für das Tragen von Funktionskomponenten der Fahrzeugtür vorgesehen sein. An der Trägerfläche ist ein längserstreckter Randabschnitt vorgesehen, der für eine Fixierung des Türmodulträgers an einem einen unteren Rand einer Fensteröffnung definierenden Brüstungsabschnitt eines ersten Rahmenbauteils der Fahrzeugtür vorgesehen ist. Der flächig erstreckte Türmodulträger bildet somit an seinem - bezogen auf den bestimmungsgemäß montierten Zustand - oberen Rand einen brüstungsnahen Randabschnitt aus, über den der Türmodulträger einfach oder mehrfach, zum Beispiel mittels Verklebung oder Verschraubung, an einem Brüstungsabschnitt eines Türrohbaus fixiert wird.

Der mit dem Organoblech gebildete Türmodulträger ist hierbei als tragendes Strukturbauteil ausgebildet und ist hierfür
- an seinem Randabschnitt durch mindestens eine an das Organoblech angespritzte Versteifungsstruktur versteift und
- mit seinem Randabschnitt zur Verstärkung des Brüstungsabschnitts des Rahmenbauteils und zur Aufnahme von dem Betrieb an der Fahrzeugtür angreifenden Lasten vorgesehen,
wobei sich der Brüstungsabschnitt des ersten Rahmenbauteils zwischen zwei einander gegenüberliegenden Flanschabschnitten eines zweiten Rahmenbauteils zur Verstärkung des Fensterrahmens erstreckt, die an dem zweiten Rahmenbauteil nur durch eine den Fensterrahmen verstärkende Fensterrahmenverstärkung des zweiten Rahmenbauteils miteinander verbunden sind.

Ein derartiger Organoblech-Türmodulträger, der zur Versteifung eines Brüstungsbereichs an einer Fahrzeugtür ausgebildet und vorgesehen ist und damit ein tragendes Strukturbauteil innerhalb der Fahrzeugtür bilden kann, ist insbesondere in einer vorgeschlagenen Fahrzeugtürbaugruppe einsetzbar.

Die beigefügten Figuren veranschaulichen exemplarisch mögliche Ausführungsvarianten der vorgeschlagenen Lösung.

Hierbei zeigen:
- FIG 1A: in Explosionsdarstellung eine Fahrzeugtürbaugruppe mit einem großflächigen Organoblech-Türmodulträger gemäß der vorgeschlagenen Lösung;
- FIG 1B: in perspektivischer Ansicht mit Blick auf eine Innenseite eine mit der Fahrzeugtürbaugruppe der Figur 1A gebildete Fahrzeugtür (ohne Innenverkleidungsteil oder Innenverkleidungsteile);
- FIG 2A: in Seitenansicht mit Blick auf eine Außenseite den durch zwei Rahmenteile definierten Türrohbau der Fahrzeugtürbaugruppe der Figuren 1A und 1B;
- FIG 2B: in mit der Figur 2 Art übereinstimmender Ansicht den Tür Rohbau mit hieran angebrachter Türaußenhaut und zusätzlichen versteifende Querstreben zur Aufnahmecrash bedingt auftretender Kräfte an der Fahrzeugtür;
- FIG 3: in mit der Figur 2 Art übereinstimmender Ansicht die Fahrzeugtürbaugruppe mit dem an der Tür rohbaumontierten Türmodulträger;
- FIGs. 4 bis 7: in vergrößerten Maßstab jeweils Ausschnitte der Fahrzeugtürbaugruppe entsprechend der Figur 3;
- FIGs. 8 bis 11: jeweils in vergrößerten Maßstab Ausschnitte des Türmodulträgers mit Blick auf einen versteiften und versteifenden Randabschnitt, über den der Türmodulträger an einem Brüstungsabschnitt des Türrohbaus fixiert wird.

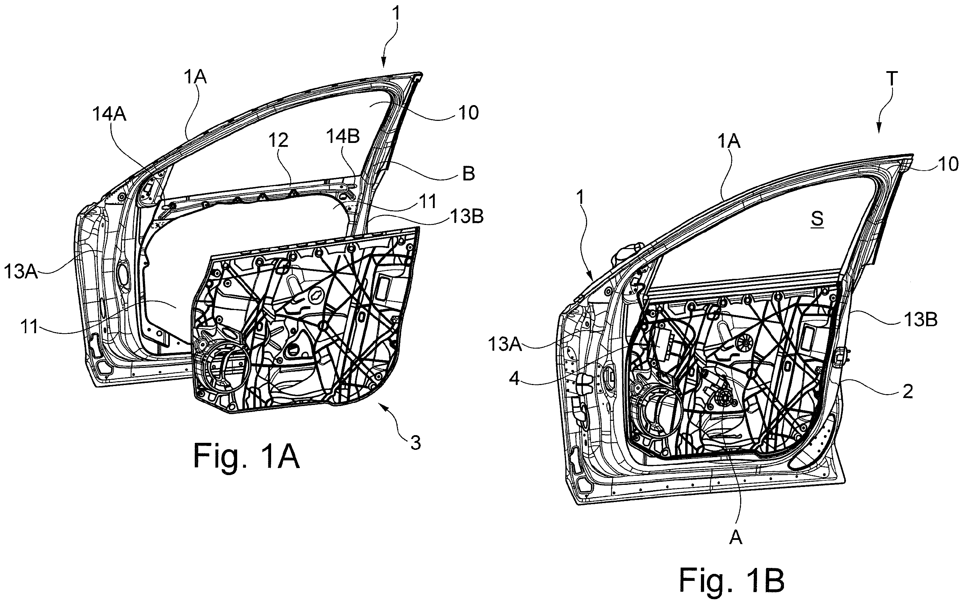

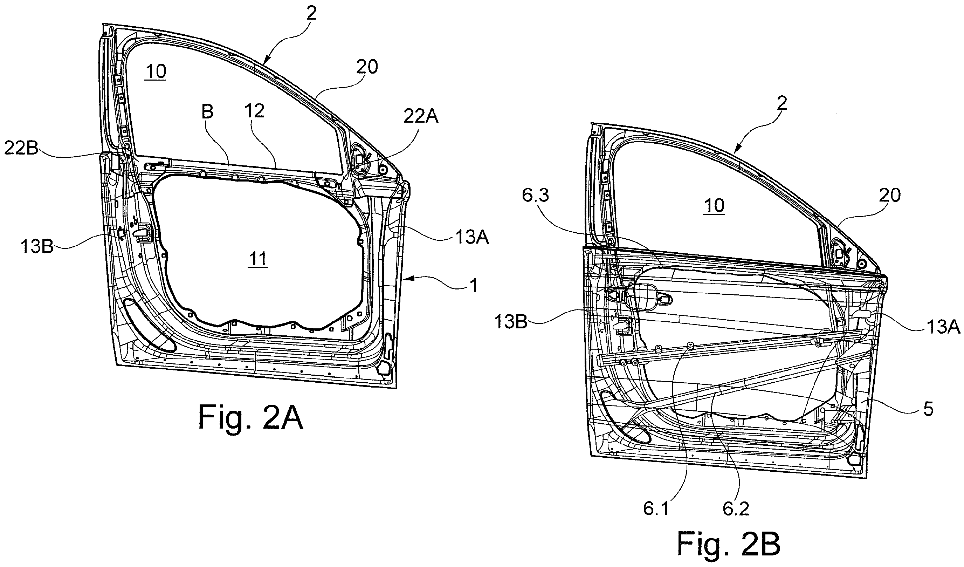

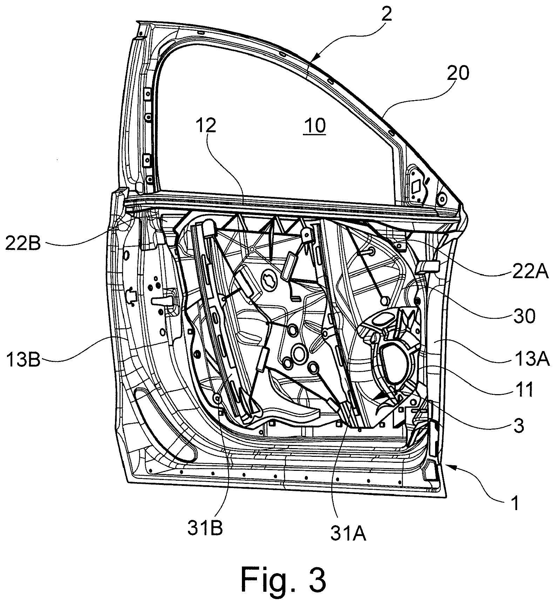

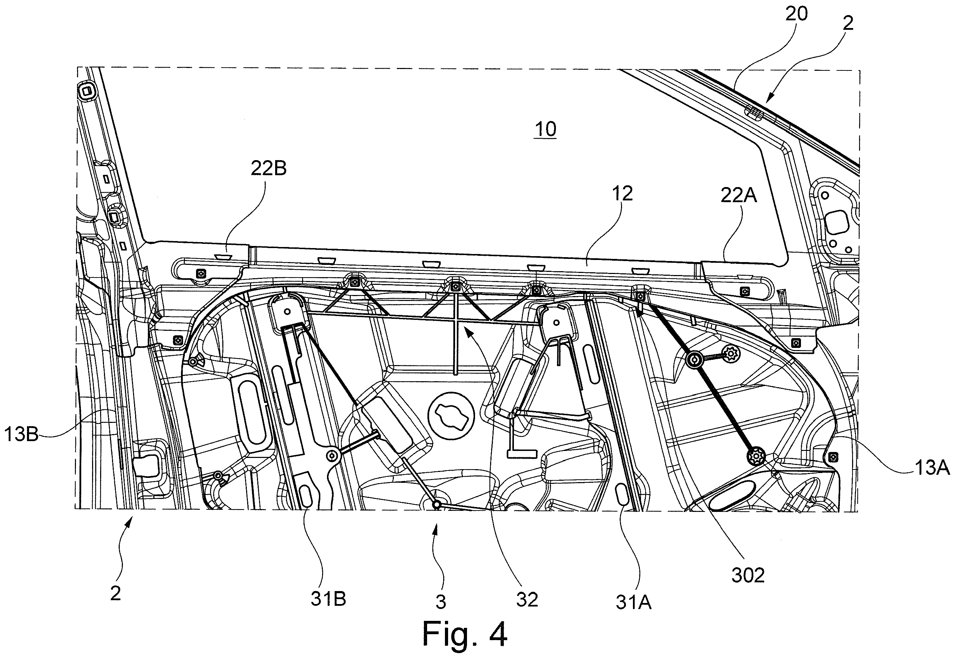

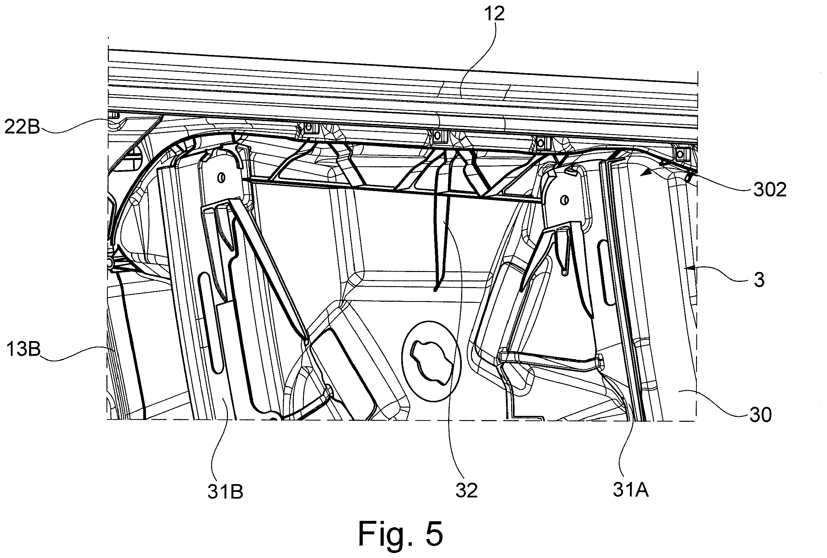

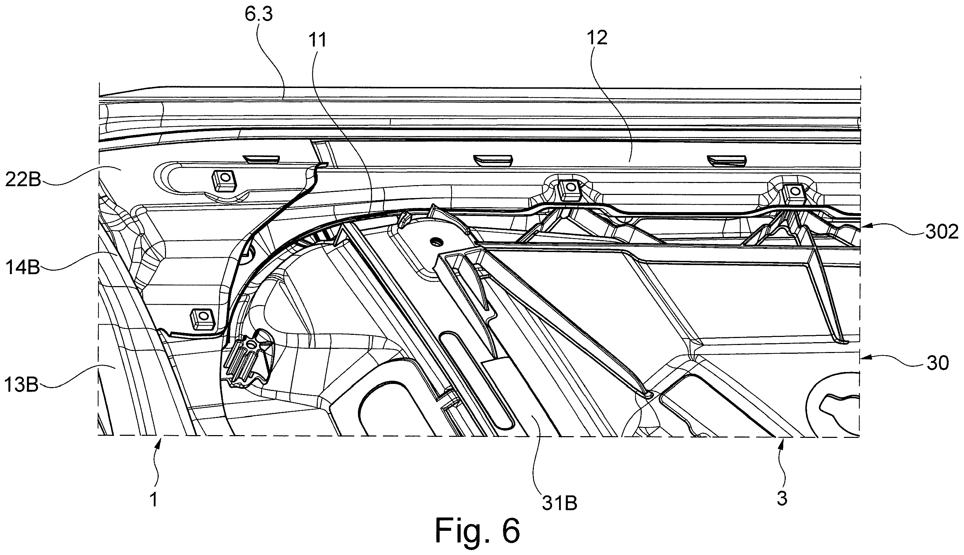

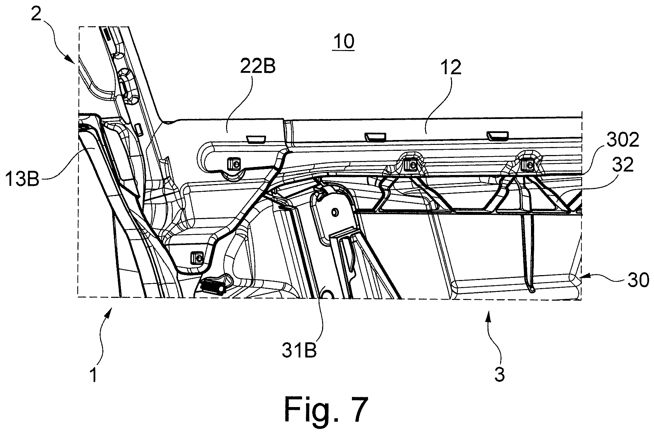

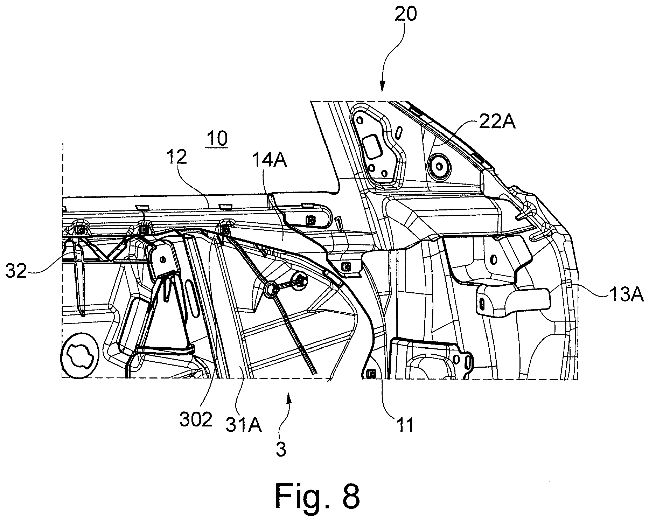

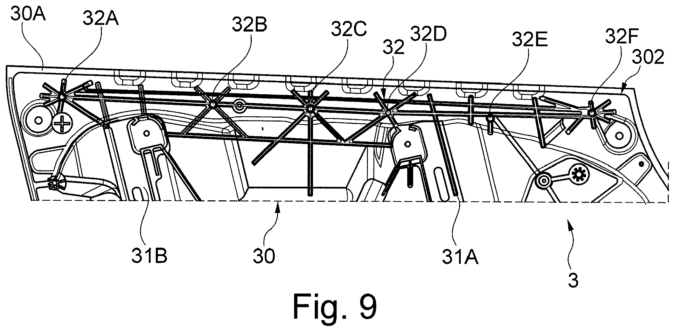

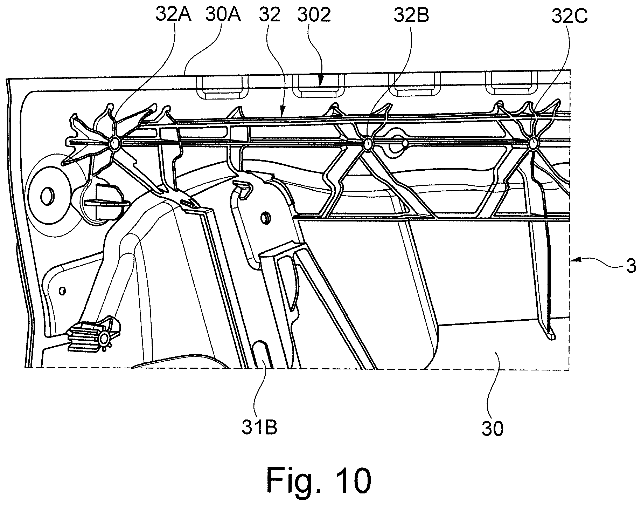

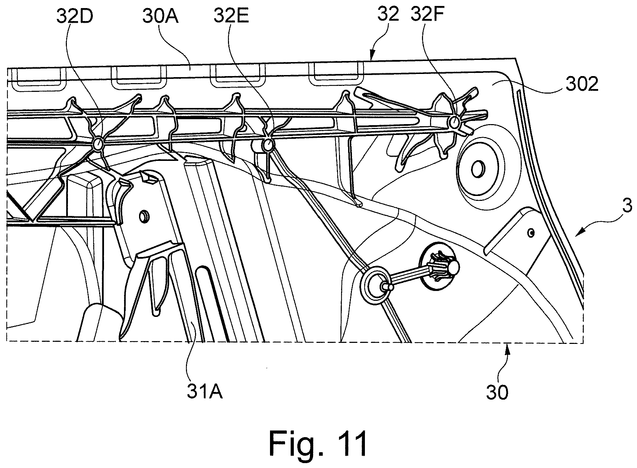

In den Figuren 1A bis 11 ist in unterschiedlichen Ansichten eine Ausführungsvariante einer vorgeschlagenen Fahrzeugtürbaugruppe dargestellt. Hierbei ist ein Türrohbau aus einem ersten Rahmenbauteil 1 und einem hieran fixierten, verstärkend wirkenden zweiten Rahmenbauteil 2 gebildet. Das erste Rahmenbauteil 1 definiert einen Fensterrahmen 1A für eine Fensteröffnung 10 an einer Fahrzeugtür T und weist zwei einander gegenüberliegende seitliche Rahmenabschnitte 13A und 13B zur Definition eines unterhalb der Fensteröffnung 10 gebildeten Rahmenausschnitts 11 auf. Zur Trennung der Fensteröffnung 10 von dem Rahmenausschnitt 11 ist ein durchgängiger Brüstungsabschnitt 12 an dem ersten Rahmenbauteil 1 ausgebildet, der die zwei seitlichen (rechten und linken) Rahmenabschnitte 13A und 13B miteinander verbindet und mit dem ein Brüstungsbereich B an der bestimmungsgemäß montierten Fahrzeugtür T definiert ist.

Der vergleichsweise große Rahmenausschnitt 10 ist durch einen großflächigen Türmodulträger 3 verschlossen. Dieser Türmodulträger 3 ist mit Organoblech gebildet, d.h. zu einem wesentlichen Teil durch ein Organoblech gebildet und vorliegend als tragendes Strukturbauteil ausgebildet. Ein Randabschnitt 302 einer Trägerfläche 30 des Türmodulträgers 3 ist hierfür durch mindestens eine an das Organoblech angespritzte Versteifungsstruktur 32 mit mehreren Versteifungsrippen versteift. Aufgrund der tragenden Funktion des Türmodulträgers 3 ist an dem Brüstungsabschnitt 12 des ersten Rahmenbauteils 1 keine zusätzliche Verstärkung durch das zweite Rahmenbauteil 2 notwendig. Das zweite Rahmenbauteil 2 bildet lediglich eine im Wesentlichen U-förmig erstreckte Fensterrahmenverstärkung 20 im Bereich eines Fensterrahmens 1A des ersten Rahmenbauteils 1 aus. Über seitliche Flanschabschnitte 22A und 22B ist das zweite Rahmenbauteil 2 lediglich in Übergangsbereichen 14A und 14B des ersten Rahmenbauteils 1 fixiert, an denen die seitlichen Rahmenabschnitte 13A und 13B jeweils in den Brüstungsabschnitt 12 übergehen.

An das Organoblech des Türmodulträgers 3 ist dabei nicht nur die Versteifungsstruktur 32 mit den Versteifungsrippen angespritzt, sondern insbesondere auch 2 Führungsschienen 31A und 31B, die Komponenten eines Fensterhebers bilden. Der Türmodulträger 3 trägt hierbei ferner auch einen Fensterheberantrieb A und ein Steuergerät 4 für diesen Fensterheber.

Darüber hinaus ist an dem Türmodulträger 3 jedenfalls an dem brüstungsnahen Randabschnitt 302 ein durchgängiger Randsteg 30A durch angespritztes Material gebildet, an dem eine Dichtung zur Abdichtung im Bereich des Brüstungsabschnitts 12 vorgesehen wird

Die Versteifungsstruktur 32, durch die der Türmodulträger 3 den Brüstungsabschnitt 12 im Brüstungsbereich B der Fahrzeugtür T versteift, ist mit mehreren Anschraubpunkten 32A bis 32F ausgebildet. Diese Anschraubpunkte 32A bis 32F bilden Befestigungsstellen für den Türmodulträger 3, an denen der Türmodulträger 3 an dem Brüstungsabschnitt 12 des ersten Rahmenbauteils 1 fixiert ist. Diese Anschraubpunkte 32A bis 32F sind ebenfalls durch an das Organoblech angespritztes Material ausgebildet und innerhalb der Versteifungsstruktur 32 mit Versteifungsrippen ausgeformt.

### Bezugszeichenliste

- 1: 1. Rahmenbauteil
- 1A: Fensterrahmen
- 10: Fensteröffnung
- 11: Rahmenausschnitt
- 12: Brüstungsabschnitt
- 13A, 13B: Seitlicher Rahmenabschnitt
- 14A, 14B: Übergangsbereich
- 2: 2. Rahmenbauteil / Rahmenverstärkung
- 20: Fensterrahmenverstärkung
- 22A, 22B: Seitlicher Flanschabschnitt
- 3: Türmodulträger
- 30: Trägerfläche
- 30A: Randsteg für Dichtung
- 302: Brüstungsnaher Randabschnitt
- 31A, 31B: Führungsschiene
- 32: Versteifungsstruktur)
- 32A - 32F: Anschraubpunkt
- 4: Steuergerät
- 5: Türaußenhaut
- 6.1, 6.2, 6.3: Querstrebe
- A: Fensterheberantrieb
- B: Brüstungsbereich
- S: Fensterscheibe
- T: Fahrzeugtür

## Patentansprüche

1. Fahrzeugtürbaugruppe, mit
- einem ersten Rahmenbauteil (1), das einen Fensterrahmen (1A) für eine Fensteröffnung (10) sowie zwei einander gegenüberliegende seitliche Rahmenabschnitte (13A, 13B) zur Definition eines Rahmenausschnitts (11) umfasst und einen Brüstungsabschnitt (12) ausbildet, der die zwei seitlichen Rahmenabschnitte (13A, 13B) miteinander verbindet und die Fensteröffnung (10) und den Rahmenausschnitt (11) voneinander trennt,
- einem zweiten Rahmenbauteil (2) zur Verstärkung des Fensterrahmens (1A), das an dem ersten Rahmenbauteil (1) fixiert ist, und
- einem Türmodulträger (3), der mit einem Organoblech gebildet ist und den Rahmenausschnitt (11) an dem ersten Rahmenbauteil (1) zumindest teilweise verschließt,
wobei der Türmodulträger (3) einen Randabschnitt (302) ausbildet, der entlang einer Längserstreckungsrichtung des Brüstungsabschnitts (12) an dem Brüstungsabschnitt (12) fixiert ist, und
wobei der mit Organoblech gebildete Türmodulträger (3) als tragendes Strukturbauteil ausgebildet ist und hierfür
- an seinem Randabschnitt (302) durch mindestens eine an das Organoblech angespritzte Versteifungsstruktur (32) versteift ist und
- mit seinem Randabschnitt (302) den Brüstungsabschnitt (12) des ersten Rahmenbauteils (1) in einem durchgehenden Bereich verstärkt, in dem kein Abschnitt des zweiten Rahmenbauteils (2) vorgesehen ist,
**dadurch gekennzeichnet, dass**
sich der Brüstungsabschnitt (12) des ersten Rahmenbauteils (1) zwischen zwei einander gegenüberliegenden Flanschabschnitten (22A, 22B) des zweiten Rahmenbauteils (2) erstreckt, die an dem zweiten Rahmenbauteil (2) nur durch eine den Fensterrahmen (1A) verstärkende Fensterrahmenverstärkung des zweiten Rahmenbauteils (2) miteinander verbunden sind.

2. Fahrzeugtürbaugruppe nach Anspruch 1, **dadurch gekennzeichnet, dass** der Brüstungsabschnitt (12) des ersten Rahmenbauteils (1) nicht durch das zweite Rahmenbauteil (2) verstärkt ist.

3. Fahrzeugtürbaugruppe nach Anspruch 1 oder 2, **dadurch gekennzeichnet, dass** sich die Flanschabschnitte (22A, 22B) des zweiten Rahmenbauteils (2) jeweils nicht über einen Übergangsbereich (14A, 14B) des ersten Rahmenbauteils (1) hinweg erstrecken, über den einer der zwei seitlichen Rahmenabschnitte (13A, 13B) in den Brüstungsabschnitt (12) übergeht.

4. Fahrzeugtürbaugruppe nach Anspruch 3, **dadurch gekennzeichnet, dass** ein Flanschabschnitt (22A, 22B) jeweils an dem zugeordneten Übergangsbereich (14A, 14B) des ersten Rahmenbauteils (1) fixiert ist.

5. Fahrzeugtürbaugruppe nach einem der vorhergehenden Ansprüche, **dadurch gekennzeichnet, dass** die Versteifungsstruktur (32) mit einer Mehrzahl an Versteifungsrippen ausgebildet ist.

6. Fahrzeugtürbaugruppe nach einem der vorhergehenden Ansprüche, **dadurch gekennzeichnet, dass** wenigstens ein dem Brüstungsabschnitt (12) gegenüberliegender Rand (30A) des Türmodulträgers (3) teilweise oder vollständig durch an das Organoblech angespritztes Material gebildet ist.

7. Fahrzeugtürbaugruppe nach einem der vorhergehenden Ansprüche, **dadurch gekennzeichnet, dass** mit der Versteifungsstruktur (32) mindestens eine Befestigungsstelle (32A-32F) ausgebildet ist, über die der Randabschnitt (302) des Türmodulträgers (3) an dem Brüstungsabschnitt (12) des ersten Rahmenbauteils (1) fixiert ist.

8. Fahrzeugtürbaugruppe nach einem der vorhergehenden Ansprüche, **dadurch gekennzeichnet, dass** an dem Türmodulträger (3) eine längserstreckte Führungsschiene (31A, 31B) eines Fensterhebers vorgesehen ist, die vollständig innerhalb des Rahmenauschnitts (11) des ersten Rahmenbauteils (1) liegt.

9. Fahrzeugtürbaugruppe nach einem der vorhergehenden Ansprüche, **dadurch gekennzeichnet, dass** an das Organoblech des Türmodulträgers (3) mindestens eine Komponente (31A, 31B) eines Fensterhebers angespritzt ist.

10. Fahrzeugtürbaugruppe nach Anspruch 9, **dadurch gekennzeichnet, dass** an das Organoblech des Türmodulträgers (3) mindestens eine Führungsschiene (31A, 31B) des Fensterhebers angespritzt ist.

11. Fahrzeugtürbaugruppe nach Anspruch 9 oder 10, **dadurch gekennzeichnet, dass** das die Versteifungsstruktur (32) und die mindestens eine an das Organoblech angespritzte Komponente (31A, 31B) des Fensterhebers aus demselben Material bestehen.

12. Fahrzeugtürbaugruppe nach einem der vorhergehenden Ansprüche, **dadurch gekennzeichnet, dass** das Organoblech des Türmodulträgers (3) aus einem faserverstärkten duroplastischen Werkstoff besteht.

13. Fahrzeugtürbaugruppe nach einem der vorhergehenden Ansprüche, **dadurch gekennzeichnet, dass** der Türmodulträger (3) zur Versteifung mindestens ein Band unidirektional ausgerichteter Verstärkungsfasern aufweist.

14. Fahrzeugtürbaugruppe nach Anspruch 13, **dadurch gekennzeichnet, dass** das mindestens eine Band unidirektional ausgerichteter Verstärkungsfasern durch ein Laminat gebildet ist.

## Claims

1. A vehicle door assembly, comprising
- a first frame component (1) which comprises a window frame (1A) for a window opening (10) and two mutually opposite lateral frame sections (13A, 13B) for definition of a frame cutout (11) and forms a sill section (12) which connects the two lateral frame sections (13A, 13B) to one another and separates the window opening (10) and the frame cutout (11) from one another,
- a second frame component (2) for reinforcing the window frame (1A), which is fixed to the first frame component (1), and
- a door module carrier (3) which is formed with an organosheet and at least partially closes the frame cutout (11) on the first frame component (1),
wherein the door module carrier (3) forms an edge section (302) which is fixed to the sill section (12) along a longitudinal extension direction of the sill section (12), and
wherein the door module carrier (3) formed with organosheet is configured in the form of a load-bearing structural component and for this purpose
- is stiffened on its edge section (302) by at least one stiffening structure (32) injection-molded onto the organosheet, and
- by way of its edge section (302) reinforces the sill section (12) of the first frame component (1) in a continuous region in which no section of the second frame component (2) is provided,
**characterized in that**
the sill section (12) of the first frame component (1) extends between two mutually opposite flange sections (22A, 22B) of the second frame component (2), which are connected to one another on the second frame component (2) only by a window frame reinforcement of the second frame component (2), said window frame reinforcement reinforcing the window frame (1A).

2. The vehicle door assembly as claimed in claim 1, **characterized in that** the sill section (12) of the first frame component (1) is not reinforced by the second frame component (2).

3. The vehicle door assembly as claimed in claim 1 or 2, **characterized in that** the flange sections (22A, 22B) of the second frame component (2) in each case do not extend beyond a transition region (14A, 14B) of the first frame component (1), via which one of the two lateral frame sections (13A, 13B) transitions into the sill section (12).

4. The vehicle door assembly as claimed in claim 3, **characterized in that** a flange section (22A, 22B) is fixed in each case to the associated transition region (14A, 14B) of the first frame component (1).

5. The vehicle door assembly as claimed in one of the preceding claims, **characterized in that** the stiffening structure (32) is formed with a plurality of stiffening ribs.

6. The vehicle door assembly as claimed in one of the preceding claims, **characterized in that** at least one edge (30A) of the door module carrier (3), said edge lying opposite the sill section (12), is formed partially or completely by material injection-molded on the organosheet.

7. The vehicle door assembly as claimed in one of the preceding claims, **characterized in that** the stiffening structure (32) forms at least one fastening point (32A-32F) by which the edge section (302) of the door module carrier (3) is fixed to the sill section (12) of the first frame component (1).

8. The vehicle door assembly as claimed in one of the preceding claims, **characterized in that** a longitudinally extended guide rail (31A, 31B) of a window regulator is provided on the door module carrier (3) and said longitudinally extended guide rail (31A, 31B) lies completely within the frame cutout (11) of the first frame component (1).

9. The vehicle door assembly as claimed in one of the preceding claims, **characterized in that** at least one component part (31A, 31B) of a window regulator is injection-molded on the organosheet of the door module carrier (3).

10. The vehicle door assembly as claimed in claim 9, **characterized in that** at least one guide rail (31A, 31B) of the window regulator is injection-molded on the organosheet of the door module carrier (3).

11. The vehicle door assembly as claimed in claim 9 or 10, **characterized in that** the stiffening structure (32) and the at least one component part (31A, 31B), which is injection-molded on the organosheet, of the window regulator are composed of the same material.

12. The vehicle door assembly as claimed in one of the preceding claims, **characterized in that** the organosheet of the door module carrier (3) is composed of a fiber-reinforced thermoset material.

13. The vehicle door assembly as claimed in one of the preceding claims, **characterized in that** the door module carrier (3) has at least one tape of unidirectionally oriented reinforcing fibers for stiffening purposes.

14. The vehicle door assembly as claimed in claim 13, **characterized in that** the at least one tape of unidirectionally oriented reinforcing fibers is formed by a laminate.

## Revendications

1. Module de porte de véhicule avec
- un premier composant de cadre (1) qui comprend un cadre de fenêtre (1A) pour une ouverture de fenêtre (10) ainsi que deux sections de cadre (13A, 13B) latérales opposées l'une à l'autre pour la définition d'une découpe de cadre (11) et réalise une section de bordure de vitre (12) qui relie l'une à l'autre les deux sections de cadre latérales (13A, 13B) et sépare l'une de l'autre l'ouverture de fenêtre (10) et la découpe de cadre (11),
- un second composant de cadre (2) pour le renforcement du cadre de fenêtre (1A) qui est fixé au premier composant de cadre (1), et
- un support de module de porte (3) qui est formé avec une tôle organique et ferme au moins partiellement la découpe de cadre (11) au niveau du premier composant de cadre (1),
dans lequel le support de module de porte (3) réalise une section de bord (302) qui est fixée à la section de bordure de vitre (12) le long d'un sens d'étendue longitudinale de la section de bordure de vitre (12), et
dans lequel le support de module de porte (3) formé avec la tôle organique est réalisé en tant que composant structurel porteur et à cet effet
- est renforcé au niveau de sa section de bord (302) par au moins une structure de renforcement (32) moulée par injection sur la tôle organique et
- renforce avec sa section de bord (302) la section de bordure de vitre (12) du premier composant de cadre (1) dans une zone continue, dans laquelle aucune section du second composant de cadre (2) n'est prévue,
**caractérisé en ce que**
la section de bordure de vitre (12) du premier composant de cadre (1) s'étend entre deux sections de bride (22A, 22B) opposées l'une à l'autre du second composant de cadre (2) qui sont reliées l'une à l'autre au niveau du second composant de cadre (2) seulement par un renforcement de cadre de fenêtre renforçant le cadre de fenêtre (1A) du second composant de cadre (2).

2. Module de porte de véhicule selon la revendication 1, **caractérisé en ce que** la section de bordure de vitre (12) du premier composant de cadre (1) n'est pas renforcée par le second composant de cadre (2).

3. Module de porte de véhicule selon la revendication 1 ou 2, **caractérisé en ce que** les sections de bride (22A, 22B) du second composant de cadre (2) ne s'étendent pas respectivement au-delà d'une zone de transition (14A, 14B) du premier composant de cadre (1), par le biais duquel une des deux sections de cadre (13A, 13B) latérales passe en la section de bordure de vitre (12).

4. Module de porte de véhicule selon la revendication 3, **caractérisé en ce qu'**une section de bride (22A, 22B) est fixée respectivement à la zone de transition (14A, 14B) associée au premier composant de cadre (1).

5. Module de porte de véhicule selon l'une quelconque des revendications précédentes, **caractérisé en ce que** la structure de renforcement (32) est réalisée avec une pluralité de nervures de renforcement.

6. Module de porte de véhicule selon l'une quelconque des revendications précédentes, **caractérisé en ce qu'**au moins un bord (30A) opposé à la section de bordure de vitre (12) du support de module de porte (3) est formé partiellement ou complètement par du matériau moulé par injection sur la tôle organique.

7. Module de porte de véhicule selon l'une quelconque des revendications précédentes, **caractérisé en ce qu'**au moins un point de fixation (32A-32F) est réalisé avec la structure de renforcement (32), par le biais duquel la section de bord (302) du support de module de porte (3) est fixée à la section de bordure de vitre (12) du premier composant de cadre (1).

8. Module de porte de véhicule selon l'une quelconque des revendications précédentes, **caractérisé en ce qu'**un rail de guidage (31A, 31B) étiré en longueur d'un lève-vitre est prévu au niveau du support de module de porte (3), lequel rail se situe complètement à l'intérieur de la découpe de cadre (11) du premier composant de cadre (1).

9. Module de porte de véhicule selon l'une quelconque des revendications précédentes, **caractérisé en ce qu'**au moins un composant (31A, 31B) d'un lève-vitre est moulé par injection sur la tôle organique du support de module de porte (3).

10. Module de porte de véhicule selon la revendication 9, **caractérisé en ce qu'**au moins un rail de guidage (31A, 31B) du lève-vitre est moulé par injection sur la tôle organique du support de module de porte (3).

11. Module de porte de véhicule selon la revendication 9 ou 10, **caractérisé en ce que** la structure de renforcement (32) et l'au moins un composant (31A, 31B) moulé par injection sur la tôle organique du lève-vitre se composent du même matériau.

12. Module de porte de véhicule selon l'une quelconque des revendications précédentes, **caractérisé en ce que** la tôle organique du support de module de porte (3) se compose d'un matériau duroplastique renforcé par des fibres.

13. Module de porte de véhicule selon l'une quelconque des revendications précédentes, **caractérisé en ce que** le support de module de porte (3) présente pour le renforcement au moins une bande de fibres de renforcement orientées de manière unidirectionnelle.

14. Module de porte de véhicule selon la revendication 13, **caractérisé en ce que** l'au moins une bande de fibres de renforcement orientées de manière unidirectionnelle est formée par un stratifié.
